# EUROPEAN PATENT APPLICATION

(11) **EP 2 088 370 A1**
(43) Date of publication of application: **12.08.2009**
(21) Application number: 08002405.2
(22) Date of filing: 09.02.2008
(51) Int. Cl.: F22B 1/28, F24C 7/08

(54) **Cooking oven comprising steam generating system**

(71) Applicant: Electrolux Home Products Corporation N.V., 1930 Zaventem (BE)
(72) Inventor: Svensson, Mats, 23175 Beddingestrand (SE); Schlup, Stefan, 8750 Glarus (CH); Jeanneteau, Laurent, 60200 Compiègne (FR)
(74) Representative: Hochmuth, Jürgen

(57) **Abstract**

To enable steam cooking in a wide range of steam modes and to improve the efficiency and safety thereof, the present invention provides a cooking oven (1) comprising a cooking chamber (3), heating elements adapted for heating food in said cooking chamber (3), a steam generating system adapted to operate at essentially atmospheric pressure operably connected to said cooking chamber (3), said steam generating system comprising a steam generator comprising at least one a water container (4) and induction heating means; wherein a water container wall comprises a heating part of a ferromagnetic material of a preselected Curie temperature that is heated by means of electromagnetic induction.

The steam generating system of the cooking oven (1) may comprise a plurality of water containers (4), wherein any one of the plurality of water containers (4) comprises a ferromagnetic heating part of a ferromagnetic material of a different preselected Curie temperature.

The invention also relates to a steam generating system.

## Description

### TECHNICAL FIELD OF THE INVENTION

The present invention generally relates to a steam generating system and a cooking oven for cooking food by steam, comprising said steam generating system.

This invention relates particularly to a steam generating system, which includes a steam generator, which is configured to heat water via induction heating means in order to generate steam, and a cooking oven comprising same.

### BACKGROUND OF THE INVENTION

Cooking food by steam is extremely versatile and has many advantages over other cooking methods. Such advantages include accelerating the cooking process, moisturizing the food during the cooking process and preserving flavour, vitamins, and nutrients. Furthermore, cooking with steam results in more homogeneously cooked food having an appearance that appeals to the senses. This has made electric steam cooking attractive not only for commercial but also for the domestic use.

Few domestic cooking oven models use steam as the sole source of heat, as a steam only oven cannot brown or crisp food as it cooks with moisture rather than with hot dry heat.

Thus, the oven according to the invention is preferably a combination oven, which combines the functions of a steam oven and a convection oven into a single unit. Such oven can be used to implement a method of cooking food by classic convection or fan-forced dry-heat, by steaming, or by a combination of both.

A typical combination convection/steam oven includes a cooking chamber and a convection air heat source similar to a conventional oven. However, a combination oven also includes a steam generating system for generating steam that is distributed within the cooking chamber to facilitate the cooking process.

Many types of steam generating systems have been developed for use with combination ovens. Typically, a conventional steam generating system includes a water container and an electric resistance heater positioned in the water container to generate steam by heating water in the water container to which a predetermined amount of water is supplied through a water supply pipe or from a separate water reservoir.

From EP-A-1795800 a steam generating apparatus is known, including a water container opened at an upper portion; a cover closing the upper portion of the water container; a barrier positioned inside the water container to partition an interior of the water container into a water supplying part and a steam generating part; at least one induction coil assembly positioned outside the water container; and an induction heating member positioned between the barrier and the induction coil assembly within the water container, and induction-heated by the induction coil assembly to allow the steam generating part to generate steam.

Heating the water container inductively has the advantage that since current is applied to the induction heating member by electromagnetic induction, it is not necessary to form terminals for supplying electric power thereto or to the water container, and therefore, it is possible to design the water container detachable, for easy refill and cleaning. Heat is produced directly in the container and thus there are no problems of transmitting heat.

The cited prior art document does not address the danger of overheating the water container by empty heating operation. Empty heating operation means that the steam generator will not cease operating even after its water supply is consumed. If the steam generator is switched on empty or is allowed to boil dry, and if there is no control to interrupt a current supply, a severe overheat situation may result. In extreme cases, this may cause a fire, or at a minimum, may significantly reduce the service life of the overworked heating member.

Generally, controls are well known, which are intended to protect a water container of a steam generating system from overheating.

Commonly known controls may comprise a bimetallic switch actuator, which is held in close thermal contact with the water container and is calibrated to operate at a certain excess temperature. However, with the type of conventional steam generator, which uses a bimetallic strip for temperature control, it is difficult to obtain an accurate and constant operation of the steam generator, because of the varying operating characteristics of bimetallic strips. Moreover, they may be difficult to apply and may not be reliable in operation.

Other contact heat sensors, e.g. comprising thermistors, impose a requirement of a water container having an absolutely flat base, which is otherwise not necessary for inductive heating. In any case, the reproducibility of such temperature control would be poor, the heat response of the sensors is slow and realization of suitable control is difficult.

Recently temperature detecting means comprising an infrared ray sensor have been suggested, but these are expensive.

Furthermore, a steam generator using such controls is not prevented from being heated without water in it unless other switching means are provided for safety.

### SUMMARY OF THE INVENTION

Thus, it is an object of the present invention to provide a cooking oven comprising a steam generating system that stably produces steam without causing overheating due to empty heating of its water container and which is efficient, reliable, cost-effective, safe and user-friendly.

The present invention provides a cooking oven for cooking food comprising a cooking chamber and a steam generating system operably connected to said cooking chamber, said steam generating system comprising a steam generator comprising a water container wherein a water container wall comprises a heating part of a ferromagnetic material of a preselected Curie temperature, comprising also induction heating means for inductively heating said heating part.

The steam generator, wherein the water container wall comprises a heating part of a ferromagnetic material of a preselected Curie temperature features temperature self-regulation of the water container without the need for conventional temperature controls and is reliable in long-term operation.

When the temperature of the heating element approaches its Curie temperature, the heating part becomes gradually nonmagnetic, which stops the electromagnetic induction heating. This results in a thermostatic effect, whose consequence is that the temperature of the water container cannot exceed the Curie temperature of the alloy of which the heating part is composed.

Thus, the water container itself can exercise a self-regulating temperature control function at a high accuracy and constantly. Such temperature self-regulation permits a steam generating device to be heated with magnetic induction for an indefinite period of time without fear of thermal runaway.

Accordingly, the invention provides a safe steam generating system that is transparent to the user and not interfering or complicating the cooking processes.

Preferably the water container comprises a heating part, wherein said ferromagnetic material has a Curie temperature between 120 °C and 300 °C, well above the boiling point of water and within the temperature range of common steam cooking operations. As the empty water container can only reach a maximum temperature corresponding to its Curie temperature, the container and its surroundings would not be seriously damaged, if it were to be accidentally forgotten about by a careless user.

Particularly preferred is a water container, the wall of which is made of a ferromagnetic material, whose Curie temperature is between 140 °C and 160 °C, whereby it is it is possible to heat water by induction up to approximately 100 °C for average steam dissipation rates.

According to one embodiment of the invention, the ferromagnetic heating part constitutes the casing of the water container.

According to another embodiment of the invention the heating part is an insert preferably incorporated into the bottom wall of the water container.

A further problem in domestic steam cooking arises from the fact that domestic steam cooking modes require changes in humidity level in the cooking chamber. In such a case, it is desirable to have some means of providing a desired level of humidity at a particular time and a different level at a different period of time. To solve this problem, conventional domestic combination ovens rely on continuous vs. intermittent operation of their steam generator system.

According to a preferred embodiment of the invention the steam generating system comprises a plurality of water containers, wherein any one of the plurality of water containers comprises a heating part of a ferromagnetic material in a different preselected Curie temperature range to provide a predetermined rate of steam dissipation, whereby the humidity in the cooking chamber is adjusted.

Each of these water containers is intended to perform a predetermined steaming operation at a target steam dissipation rate corresponding to the preselected Curie temperature of said container. By choosing an appropriate water container with a desired Curie temperature for specific steaming operations, the level of humidity during the cooking process is controlled for a wide range of conditions normally associated with domestic cooking.

For example, very low humidity may be desired when cooking by radiant heating or convection to form a crust on the outside of certain foods, such as pastries, bread and meats. Accordingly, a water container comprising a heating element with a Curie temperature between 120 °C and 140 °C may be provided, which will keep water at minimal boil and produce a low steam dissipation rate.

An intermediate level of humidity may be desired for defrosting frozen food and warming up of convenience food. Accordingly, a water container comprising a heating element with a Curie temperature between 140 °C and 160 °C may be provided.

Particularly high levels of humidity are needed for steam cooking of vegetables or fruit. Accordingly, a water container comprising a heating element with a Curie temperature between 160 °C and 200 °C may be provided.

No overcooking or draining of those specific foods will occur, as the steam generator heats only up to the desired steam dissipation range.

The invention may also be used for steam cleaning of the cooking chamber. Cleaning a steam oven is a lot easier, if a steam generator with a specific very high Curie temperature in the range of 200 to 300 °C is used.

The water container of the steam generator may be located external to the cooking chamber and piping conveying steam produced in the steam generator into the cooking chamber via a steam outlet pipe.

Alternatively, the water container of a steam generating system may be located internally to the cooking chamber, preferably mounted in a cavity under the bottom wall of the cooking chamber. Such design is space saving, furthermore, the steam generator located in the oven chamber is very energy efficient.

The steam generator system may comprise a manually refillable water reservoir. Alternatively, the steam generating system may include a water supply pipe, through which water is supplied to the water container from a mains water supply or from a separate water reservoir. Preferably, the water supply means comprises also a pump, controlled by an electronic water control element such as a piloting valve.

Preferably the cooking oven comprises a manual or automatic water supply control for an adjustable control of the water supply to the water container as well as a manual or automatic current supply control for an adjustable control of the rate of power dissipation to the heating means.

The steam generating system may comprise a magnetic detection means responsive to a change of the magnetic behavior of the ferromagnetic heating part at its Curie temperature, generating a magnetic detection output signal. Additionally the steam generating system may comprise a water level detection means.

It may also comprise a timer and/or a counter for counting the number of passages of the heating part through its Curie temperature under operation.

Particularly preferred is an embodiment of the steam generating system comprising control circuitry operably connected between a detection means and a supply control for controlling the operation of the heating means and or the water supply means based on a output signal from the detection means.

As a result, a water shortage in the water container can be avoided, and, regardless of ambient conditions of the water container, a steady steaming operation can be performed

According to a further aspect, the present invention also relates to a steam generating system comprising a steam generator comprising at least one water container wherein a water container wall comprises a ferromagnetic heating part of a ferromagnetic material of a preselected Curie temperature, said steam generator also comprising induction heating means for inductively heating said heating part.

### BRIEF DESCRIPTION OF THE DRAWING

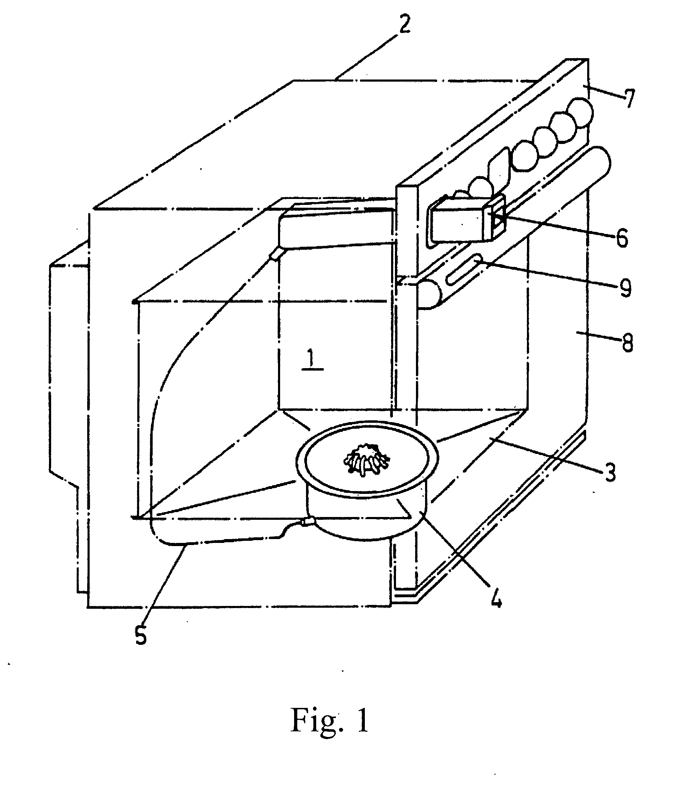

FIG 1 is a schematic perspective view of a combination steam oven comprising a steam generator comprising a water reservoir.

### DETAILED DESCRIPTION OF EMBODIMENTS

The cooking oven according to the present invention may be designed as a steam oven for professional or private use that uses steam as the sole method of cooking, but typically will be a combination oven that uses steam as well as dry heat for cooking food.

Preferably, the combination oven is a conventional household appliance comprising a conventional convection cooking oven comprising a cooking chamber equipped with an additional steam generating system operably connected to said cooking chamber and adapted for steam-cooking at essentially atmospheric pressure. Such oven is versatile and may be operated in various cooking modes to cook food either by dry-heat, by steaming, or by a combination of both, either in parallel and/or in series.

Said steam generating system comprises a steam generator having a water container and induction heating means for generating a magnetic field; wherein a water container wall comprises a heating part of a ferromagnetic material of a preselected Curie temperature that is heated by means of electromagnetic induction through an action of the magnetic field generated by the induction heating means.

FIG 1 illustrates an exemplary household cooking oven equipped with a steam generator system. The combination oven shown is typical in that the oven 1 comprises a housing 2 enclosing an open-faced cooking chamber 3 having a pair of spaced side walls, joined by a top wall, a bottom wall and a rear wall, and a door 8 for opening and closing the cooking chamber.

Typically, the cooking chamber of a domestic cooking oven is not pressurized but operates at atmospheric pressure, whereby complex sealing structures are not needed.

The oven shown works via the diffused steam method. The food is placed on shelves mounted on supports (not shown) in the chamber and the steam is allowed to fill the entire cooking chamber. This method particularly allows cooking several dishes simultaneously.

While not shown in FIG 1, the combination oven of the invention includes also resistive heating elements for dry heat cooking, as usually mounted above and below the cooking chamber walls in the housing.

The cooking chamber may further comprise a fan for fan-forced circulation of cooking gases, hot convection air and/or steam, resulting in a more even temperature distribution.

A vent 9 is provided to permit steam and fumes to escape from the cooking chamber 3 so as to have substantially atmospheric operating conditions within the cooking chamber 3.

The oven further comprises a control panel 7 provided with various operating switches and display devices, installed on the front surface of the housing.

The steam generator of a cooking oven according to the invention includes a water container 4 designed to contain a predetermined amount of water to be converted into steam by inductive heating.

According to one embodiment of the invention, the steam generator is structured such that a water container is installed within the oven housing outside of the cooking chamber. Steam generated from the water container is introduced into the cooking chamber via a steam supply pipe. Such container may be moved into and out of the oven housing irrespective of the closed or open oven door.

According to the embodiment of the invention shown in FIG 1, the oven is structured such that the steam generator is installed in a lower region of the cooking chamber 3. As shown in FIG 1, the water container of the steam generator mounted in a cavity under the bottom wall of the cooking chamber. It is covered by a removable lid, which ensures the continuity of bottom wall, as it is flush therewith.

A plurality of outlet openings is arranged in the lid so as to guide and supply the steam generated in the water container into the cooking chamber.

The water container as a whole is preferably removable mounted to allow for cleaning purposes or for replacement by another water container. If the water container itself is removable mounted, it can be filled manually with tap water.

Otherwise, water-supply means and water supply control means may be provided to eliminate the need to constantly monitor and manually refill the water container.

In the embodiment shown in FIG 1 the water supply means include a water reservoir 6 adapted to be fed from the outside. The water reservoir as shown is designed as a partially extractable water charging drawer, disposed above the water container. It is in fluid communication with a water container via a water supply pipe 5. In operation, water from the reservoir is gravity-fed to the water container via the water supply pipe 5. Otherwise, a water supply valve and a pump may be provided that will allow metering the water flow from said reservoir to the container.

Alternatively, the steam generator may receive water from a water supply line operably connected directly to the mains water supply. It will also comprise a water supply valve and preferably a drain with access to a mains drain.

A respective water supply valve may be manually operated or automatically operated by an electronic water supply control, in response to an output signal generated by a water level detections means.

Conventional induction heating means are provided to heat the water container and the water therein to a temperature as to provide steam in the cooking chamber.

Such induction heating means are based on an electromagnetic induction heating scheme designed to cause a magnetic field generated to act on a heating part of the water container of the steam generator.

Current is typically induced by an induction coil placed beneath the water container. An alternating current (AC), such as an AC current operating at, but not limited to, a frequency of 20 kilohertz or greater, produced by an inverter, is supplied to the coil. Accordingly, a magnetic field is generated by the AC current in the coil. The generated magnetic field induces eddy currents in the heating part of the water container, to heat the container and its contents. Thermal losses, generated through the skin effect add to the heating and improve the efficiency.

The induction heating means include a current supply control for a manually or automatically adjustable control of the rate of power dissipation to the heating means.

According to the invention, the water container comprises a heating part of a ferromagnetic material with a preselected Curie temperature.

Such part of a ferromagnetic material can be easily induction heated and produces a sufficient heating effect to the water container to produce steam.

Various constructions of the heating part are possible. For example, the heating part may be a grid inserted into the bottom wall of the container.

According to another embodiment the heating part is a plate made of a ferromagnetic alloy placed on the external wall of the bottom of the water container and either separated from the wall by an aluminium layer intended to distribute the heat well or joined to the bottom and covered on its external face with an austenitic stainless steel layer intended to ensure good corrosion resistance.

According to another embodiment, the heating part constitutes the wall of the water container.

According to the invention, the heating part is made of a specific ferromagnetic material, typically an alloy, having a preselected Curie temperature above the boiling point of water, preferably, but not limited to a temperature range between 120 °C and 300 °C, so as to avoid overheating of the steam generating system.

The Curie temperature of a ferromagnetic material is the temperature value marking its transition between ferromagnetism and paramagnetism.

When the ferromagnetic material attains the Curie temperature it undergoes a solid-to-solid phase change transformation, which causes the material to become paramagnetic, i.e. effectively non-magnetic.

As long as the temperature of the heating part is below the Curie temperature, the alloy is ferromagnetic and can generate losses by induced currents, thereby heating the water container. As soon as the temperature of the part exceeds the Curie temperature, the alloy is no longer ferromagnetic and the induction heating stops.

In normal steaming operation, the temperature of the ferromagnetic heating element does not rise up to its Curie temperature, if the wattage of the induction heating means is restricted accordingly. Particularly, it will not exceed the boiling point of water at approximately 100 °C, until water in the water container is boiled off, because heat generated in the heating part is absorbed by water, i.e. the heating part is cooled by the water.

Only when the water in the water container is boiled off, the temperature of the ferromagnetic heating part rapidly rises up to its Curie temperature. Then, when a ferromagnetic material reaches or exceeds its Curie temperature, the relative magnetic permeability of the material drops rapidly from a value of between about 100 and 1000, depending upon the metal or alloy, to a value of about 1. No more heat is generated in the heating part, even though the induction coils are still operating. Thus, the heating part of a ferromagnetic material will effectively turn the boiling operation "off," even though the induction heating unit is still "on."

The heating part then cools. When the temperature drops below the effective Curie temperature, heating of the heating part resumes. The heating and cooling process repeats itself indefinitely. The result is that the heating part is maintained at its effective Curie temperature by a pulsating eddy current flow fed to it, without fear of thermal runaway.

Thus, at the temperature of the specific Curie temperature or higher, the water container itself can exercise an automatic self temperature control function at a high accuracy constantly.

According to a preferred embodiment of the invention, the steam generating system comprises a plurality of water containers, wherein any one of the plurality of water containers comprises a heating part of a ferromagnetic material of a different preselected Curie temperature.

When subjected to an induction field generated by the induction heating means of the steam generator, the ferromagnetic material of any water container heats to said selected target temperature to provide a predetermined rate of steam dissipation whereby the humidity in the cooking chamber is adjusted for specific steam cooking modes.

It should be noted here, that the target temperatures achievable in a water container can be as little as 1 °C or as much as 100 °C less than the preselected Curie temperature, depending upon the material and size of the part, the size of the water container employed, etc.

By proper choice of ferromagnetic materials, the steam dissipation rate can be made to coincide with the optimum level of humidity for a particular food or group of foods, so that a water container comprising a heating part of such a material can serve as the vehicle for practicing a controlled cooking method for a wide range of conditions normally associated with domestic cooking.

For example, very low humidity may be desired, when cooking by radiant heat or convection to form a crust on the outside of certain foods, such as pastries and meats. The same applies to rising yeast dough at low temperatures and to baking bread. Accordingly, a water container comprising a heating element with a Curie temperature between 120 °C and 120 °C may be provided.

An intermediate level of humidity may be desired for defrosting frozen food and warming up of convenience food. Accordingly, a water container comprising a heating element with a Curie temperature between 120 °C and 140 °C may be provided.

Particularly high levels of humidity are necessary for steam cooking of vegetables or fruit. Accordingly, a water container comprising a heating element with a Curie temperature between 160 °C and 200 °C may be provided.

No overcooking or draining of those specific foods will occur, as the steam generator heats only up to the desired steam dissipation range.

Besides from steam cooking, steam is also useful for cleaning the cooking chamber of a cooking oven. Cleaning a steam oven is a lot easier if a steam generator with a specific very high Curie temperature in the range of 250 °C to 300 °C is used for a steam cleaning program, whereby a still higher level of humidity is applied.

According to an embodiment of the invention, the plurality of water containers is provided with instructive indicia markings to facilitate user recognition and selection thereof.

Such indicia markings may take a variety of forms to convey information relative to the use of each specific cooking utensil. Preferably, the indicia marking represent letters and/or numerals and/or symbols. In a most preferred way, the indicia form cooking terms such as "BOIL", "BAKE", "WARM-UP" or "CLEAN" or similar designations and descriptions.

For controlling the supply of current and water, the control circuitry means of the steam generating system may comprise simple manually switching means. Even if it were to be accidentally forgotten about by a careless user, the steam generator comprising a heating part of a ferromagnetic material of a preselected Curie temperature, which is heated by means of electromagnetic induction, provides a temperature self-regulating device and is intrinsically safe in operation.

Nevertheless, to ensure that the steam generator is not operational unless there is a supply of water in the system, the steam generating system may further be improved by adding a electronic control circuitry means which is designed to automatically interrupt or limit a current supply to the induction heating device or to activate a water supply means, when the water in the water container has been depleted.

In particular, the steam generating system may comprise control circuitry means comprising a magnetic detection element responsive to the change of magnetic behavior of the ferromagnetic material of the heating part of the water container at its specific Curie temperature to generate a magnetic detecting output signal, and comprising also a control circuitry connected between the magnetic detection element and the supply control means of the steam generator for triggering operation of a supply control element that controls a current or water supply, based upon the signal from the magnetic detection element.

Such magnetic detection elements may be of any type known per se, as such detection and signal processing of a magnetic parameter does not require thermalor physical contact with the water container.

The magnetic detection element may be as simple as the magnet of a mechanical magnetic switch or a switch of the Reed type. Because of the sudden change in magnetic properties of the heating part at its Curie temperature, consistent, reliable and accurate additional control of the operation of a steam generator can be achieved by any magnetic switch.

Accordingly, the steam generator may comprise one or more magnetic switches to interrupt or limit the power supply to the induction heating means or to start feeding water into the water container.

According to another embodiment, the steam generating system may comprise a sensor coil as the magnetic detection element. The sensor coil being arranged next to the water container within magnetic influence of the heating part and the tails of the coil are electrically connected to the control circuitry.

At the transition of the material of the heating part from ferromagnetic to non-ferromagnetic and vice-versa, a rapid change in inductance in the sensor coil is produced. The change in inductance of the sensor coil and a resulting variation in an electrical output signal level from the coil can be used for automatic switching of the current supply to the induction heating means of the steam generator.

Another useful magnetic detection means is designed to employ an output signal that depends upon the change of parameters of the induction heating coil ("work coil") of the induction heating means of the steam generator, known as "no load" detection means.

To this end, various types of feedback parameters, related to the impedance of the load presented to the induction heating means by the heating part at the Curie transition, may be used to determine whether and when to interrupt the current supply or to activate a water supply.

The exact parameter sensed by the various known "no-load" detection means may differ. Some sense the change of current flowing through the induction coil, some sense the voltage drop across a particular resistor in the detection circuit, some detect a variation in oscillation frequency, still others another parameter that changes as the heating part passes through its effective Curie temperature.

Besides detection means, responsive to the change of magnetic behavior of the heating part of the water container, the steam generating system may comprise a water level detection element responsive to the change of the water level in the water container to ensure that the steam generator is not operational unless there is a supply of water in the container.

The water level detector element may be of any type known per se. The sensor can be, for example, as simple a mechanical float switch for cutting of the flow of electricity to the steam generator's heating source or to actuate a water supply.

Alternatively or additionally to a magnetic or water level detection means, the control circuitry of the steam generator may operably connected to a timer and/or a counter.

A timer, particularly a digital timer, may be used e.g. for setting a time interval during which water flow to said container is maintained, when an empty-boil situation has been detected.

According to another embodiment, a counter may be used. To detect the depletion of water in the container and stop heating, the counter counts the number of passages of the heating part through its Curie temperature. When passage is counted more than a preset number of times, the situation is judged as empty boil heating and a decision is made by the control circuitry to open a water supply valve to activate a water pump or to stop current application.

According to a preferred embodiment of the invention, the control circuitry means comprises a microprocessor-based control circuitry, operably connected between the detection means and the supply control means.

The control circuitry conveniently includes a microprocessor to run a control algorithm that monitors the output signals of available detection means to make a decision how to fulfill control operations associated with the water and current supply, aside from manual inputs by the user.

Output signal parameters are determined and compared with a set of nominal optimal parameters, and the difference between these is used in a redefined algorithm for establishing control parameters for selectively initiating, interrupting or limiting power supply to the induction heating means and/or starting or stopping of water feed to the water container.

The algorithm may allow to implement alternative regulation schemes based on the information transmitted from the detection means, such as a stand-by mode, continuous or intermittent heating mode, continuous or intermittent water supply mode, stop heating during water supply and thereafter reverting to a heating mode.

Other improvements, modifications and embodiments will become apparent to one of ordinary skill in the art upon review of this disclosure. Such improvements, modifications and embodiments are considered to be within the scope of this invention as defined by the following claims.

## Claims

1. Cooking oven comprising a cooking chamber and a steam generating system operably connected to said cooking chamber, said steam generating system comprising a steam generator comprising a water container, wherein a water container wall comprises a ferromagnetic heating part of a ferromagnetic material of a preselected Curie temperature, said steam generator also comprising induction heating means for inductively heating said heating part.

2. Cooking oven according to claim 1, wherein the ferromagnetic material has a Curie temperature of between 120 °C and 300 °C.

3. Cooking oven according to claim 1 or claim 2, wherein the ferromagnetic heating part constitutes the casing of the water container.

4. Cooking oven according to claim 1 or claim 2, wherein the ferromagnetic heating part is an insert.

5. Cooking oven according to any of the preceding claims, wherein the steam generating system comprises a plurality of water containers, wherein any one of the plurality of water containers comprises a ferromagnetic heating part of a ferromagnetic material in a different preselected Curie temperature range.

6. Cooking oven according to claim 1 and claim 5, wherein a water container comprises a heating part of a ferromagnetic material with a Curie temperature between 120 °C and 140 °C or between 140 °C and 160 °C or between 160 °C and 200 °C or between 200 °C and 300 °C.

7. Cooking oven according to one of claims 1 to 6, wherein the water container is mounted externally to the cooking chamber and connected to it via a steam outlet pipe.

8. Cooking oven according to one of claims 1 to 6, wherein the water container is mounted internally to the cooking chamber.

9. Cooking oven according to any of the preceding claims, wherein the water container is connected to a water supply pipe, through which water is supplied to the water container from a mains water supply or from a separate refillable water reservoir, preferably further comprising a manual or automatic water supply control for an adjustable control of the water supply to the water container.

10. Cooking oven according to any of the preceding claims comprising a manual or automatic current supply control for an adjustable control of the rate of power dissipation to the heating means.

11. Cooking oven according to any of the preceding claims, wherein the steam generating system comprises a magnetic detection means responsive to a change of the magnetic behavior of the ferromagnetic heating part.

12. Cooking oven according to any of the preceding claims, wherein the steam generating system comprises a water level detection means and/or a timer and/or a counter.

13. Cooking oven according to claim 11 or claim 12, comprising control circuitry operably connected between a detection means and a supply control, wherein preferably the control circuitry comprises a counter for counting the number of passages of the heating part through its Curie temperature.

14. Steam generating system comprising a steam generator comprising at least one water container wherein a water container wall comprises a ferromagnetic heating part of a ferromagnetic material of a preselected Curie temperature, said steam generator also comprising induction heating means for inductively heating said heating part.
